# EUROPÄISCHE PATENTSCHRIFT

(11) **EP 2 206 626 B1**
(45) Veröffentlichungstag und Bekanntmachung des Hinweises auf die Patenterteilung: **14.12.2011**
(21) Anmeldenummer: 09013293.7
(22) Anmeldetag: 21.10.2009
(51) Int. Cl.: B60N 3/00, B60N 3/10

(54) **Fahrzeugsitz mit einem an der Rückenlehne angeordneten Tisch**
Vehicle seat with a table attached to the backrest
Siège de véhicule doté d'une table agencée sur le dossier

(30) Priorität: 17.11.2008 DE 102008057790
(43) Veröffentlichungstag der Anmeldung: 14.07.2010
(73) Patentinhaber: Johnson Controls GmbH, 51399 Burscheid (DE)
(72) Erfinder: Evels, Sebastian, 42369 Wuppertal (DE); Hosták, Róbert, 91101 Trencin (SK); Fissler, Leonid, 51381 Leverkusen (DE); Bellamy, Nathan, 42657 Solingen (DE)
(74) Vertreter: Wolff, Felix

(56) Entgegenhaltungen:
- EP-A- 1 602 528
- DE-A1-102005 005 654
- DE-B3-102006 016 700
- DE-C1- 19 833 888
- DE-U1-202006 009 880
- US-B1- 6 702 375

## Beschreibung

Die vorliegende Erfindung betrifft einen Fahrzeugsitz mit einem an dessen Rückenlehne schwenkbar angeordneten Tisch, der eine an der Rückenlehne vorgesehene Halterung und einen Schwenkmechanismus aufweist.

Derartige gattungsgemäße Fahrzeugsitze sind aus dem Stand der Technik bekannt (siehe z.B. EP-A-1 602 528, dem oberbegriff entsprechend). An der Rücklehne dieser Sitze ist schwenkbar ein Tisch vorgesehen, der von einer Verstaustellung, in der er sich im Wesentlichen parallel zur Rücklehne befindet, in eine Gebrauchsstellung, in der er im Wesentlichen senkrecht zu der Rücklehne angeordnet ist, verbracht werden kann. Dafür weist der erfindungsgemäße Fahrzeugsitz einen Schwenkmechanismus für den Tisch auf, der gemäß dem Stand der Technik in der Halterung des Tisches an der Rückenlehne des Fahrzeugsitzes angeordnet ist. Diese Fahrzeugsitze gemäß dem Stand der Technik haben jedoch den Nachteil, dass insbesondere die Halterung des Tisches sehr tief baut, so dass der Platz hinter der Rückenlehne beschränkt ist und auch beim Ein- und Aussteigen die Gefahr besteht, sich an der Halterung zu stoßen.

Es war deshalb die Aufgabe, einen Fahrzeugsitz zur Verfügung zu stellen, der die Nachteile des Standes der Technik nicht aufweist.

Gelöst wird die Aufgabe mit einem Fahrzeugsitz, mit einem an dessen Rückenlehne schwenkbar angeordneten Tisch mit den technischen Merkmalen des Anspruchs 1.

Der erfindungsgemäße Fahrzeugsitz, insbesondere die Tischkonstruktion, baut wesentlich flacher als vom Stand der Technik bekannt, so dass die oben geschilderten Nachteile nicht mehr auftreten. Der erfindungsgemäße Fahrzeugsitz ist einfach und kostengünstig herzustellen.

Die vorliegende Erfindung betrifft einen Fahrzeugsitz, der einer oder mehreren Personen Platz bietet. Bei dem Fahrzeugsitz kann es sich demnach auch um eine Sitzbank handeln. Dieser Fahrzeugsitz weist ein Sitzteil und eine Rückenlehne auf, wobei an der der Rückanlagefläche abgewandten Seite der Rücklehne schwenkbar ein Tisch angeordnet ist. Dafür ist an der Rücklehne eine Halterung vorgesehen.

Erfindungsgemäß ist nun der Schwenkmechanismus in dem Tisch und nicht in der Halterung angeordnet. Mit dem Schwenkmechanismus kann der Tisch zumindest um 90°, vorzugsweise bis zu 180° verstellt werden, wobei insbesondere die Verstaustellung, in der sich der Tisch im Wesentlichen parallel zu der Rückenlehne, und die Gebrauchsstellung, in der Gegenstände auf dem Tisch abgelegt werden können, besonders wichtig sind.

In einer bevorzugten Ausführungsform ist der Tisch zumindest in einer, vorzugsweise in mehreren Positionen, verrastbar. Dafür weist der erfindungsgemäße Fahrzeugsitz einen Rastmechanismus auf, der auch im Tisch angeordnet ist. Insbesondere in der jeweiligen Gebrauchsstellung ist der Tisch verrastbar, aber besonders bevorzugt auch in der jeweiligen Verstaustellung.

Erfindungsgemäβ weist dieser Rastmechanismus ein ortsfestes Form- und/oder Kraftschlusselement auf, das insbesondere drehfest mit der Halterung des Tisches, die sich an der Rückenlehne befindet, verbunden ist.

Erfindungsgemäβ wirkt dieses Form- und/oder Kraftschlusselement mit einem Form- und/oder Kraftschlusselement rastend zusammen, das an dem Tisch angeordnet ist und sich gemeinsam mit dem Tisch dreht.

Die beiden Form- und/oder Kraftschlusselemente stellen erfindungsgemäβ auch das Dreh- bzw. Schwenklager für den Tisch dar.

Vorzugsweise weist der erfindungsgemäße Fahrzeugsitz ein Federmittel auf, das die beiden Form- und/oder Kraftschlusselemente gegeneinander vorspannt. Dadurch ist zum einen sichergestellt, dass keine Geräuschentwicklung auftritt, zum anderen wird dadurch auch erreicht, dass sich die beiden Form- und/oder Kraftschlusselemente immer in einer rastenden Stellung befinden.

In einer anderen bevorzugten Ausführungsform wirkt das Federelement direkt mit dem ortsfest angeordneten Form- und/oder Kraftschlusselement zusammen.

Im Folgenden wird die Erfindung anhand der Figuren 1 bis 6b erläutert. Diese Erläuterungen sind lediglich beispielhaft und schränken den allgemeinen erfindungsgemäßen Gedanken nicht ein.
- **Figur 1**: zeigt den erfindungsgemäßen Fahrzeugsitz.
- **Figur 2**: zeigt Details des Fahrzeugsitzes gemäß Figur 1.
- **Figur 3**: zeigt die Verkleidung des Tisches des erfindungsgemäßen Fahrzeugsitzes.
- **Figuren 4 - 4b**: zeigen eine erste Ausführungsform des Schwenk-/ Rastmechanismus.
- **Figuren 5 - 5a**: zeigen eine weitere Ausführungsform des Schwenk-/ Rastmechanismus.
- **Figuren 6 - 6b**: zeigen eine dritte Ausführungsform des Schwenk-/ Rastmechanismus.

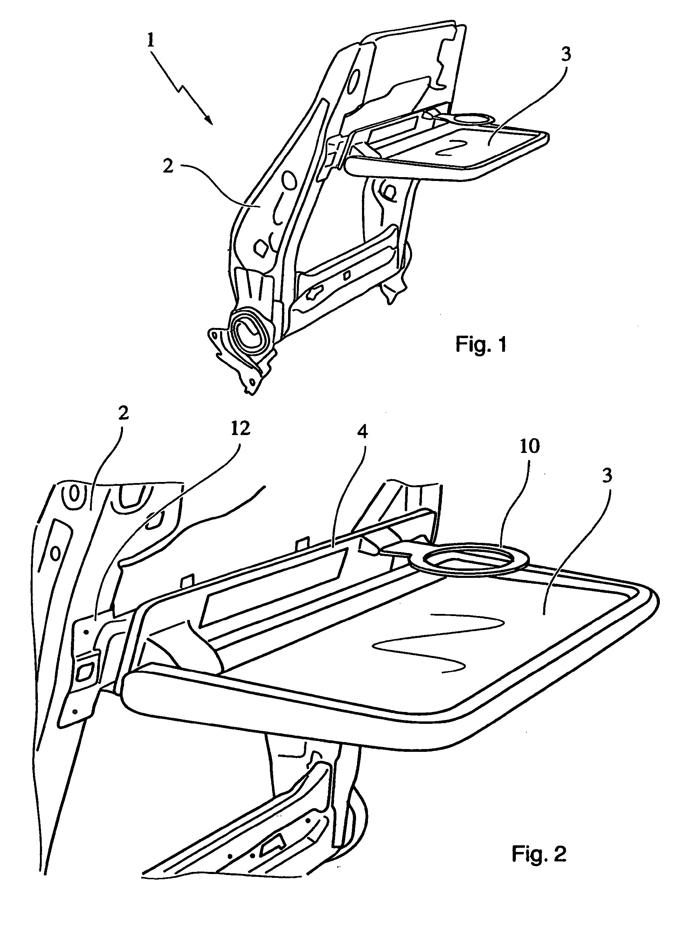

Figur 1 zeigt den erfindungsgemäßen Fahrzeugsitz 1. Dieser weist ein Sitzteil (nicht dargestellt) auf, auf dem der Fahrzeuginsasse Platz nimmt und eine Rücklehne 2 auf. An der dem Fahrzeuginsassen abgewandten Seite der Rückenlehne 2 ist ein Tisch 3 schwenkbar angeordnet. Figur 1 zeigt den Tisch in seiner Gebrauchsposition, in der Gegenstände auf dem Tisch abgelegt werden können. Sobald der Tisch nicht mehr benötigt wird, wird er vorzugsweise im Uhrzeigersinn insbesondere um 90° in eine Stellung, der sogenannten Staustellung verbracht, in der er sich im Wesentlichen parallel zu der Rückenlehne befindet.

Figur 2 zeigt Details des Tisches gemäß Figur 1. Es ist zu erkennen, dass der Tisch einen Rand aufweist, um zu vermeiden, dass die Gegenstände von dem Tisch rutschen. Des Weiteren ist zu erkennen, dass im Bereich der Halterung 4 ein Becherhalter 10 angeordnet ist, der ebenfalls schwenkbar von einer Gebrauchs- in eine Verstauposition verbringbar ist. Die Halterung 4 ist in dem vorliegenden Fall an einem Querriegel angeordnet, der wiederum mit dem Rahmen der Rückenlehne des Fahrzeugsitzes form-, kraft- und/oder stoffschlüssig verbindbar ist.

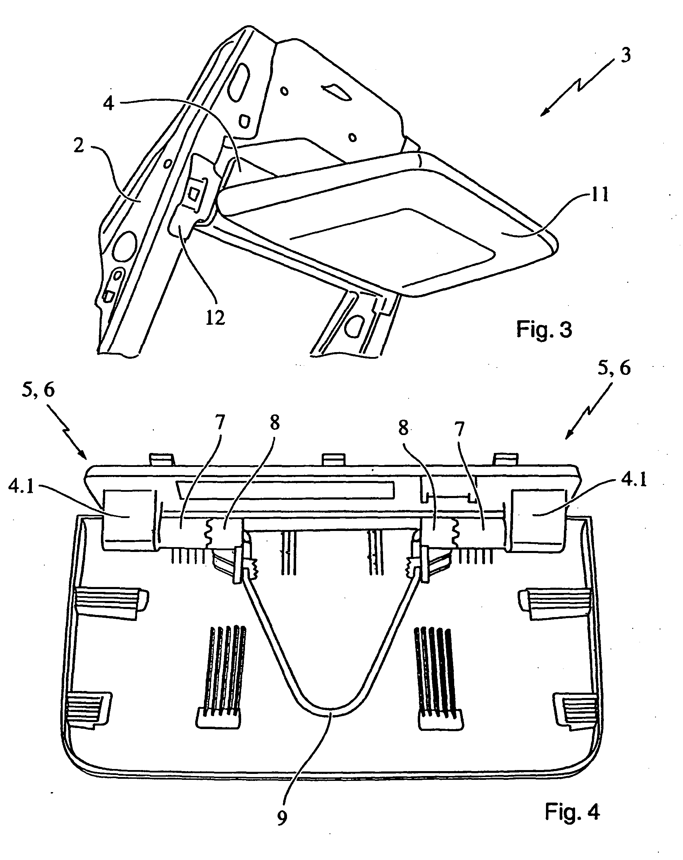

Figur 3 zeigt den erfindungsgemäßen Fahrzeugsitz mit dem Tisch in einer Ansicht von unten. Es ist zu erkennen, dass der Tisch in seinem unteren Bereich eine Abdeckung 11 aufweist, die insbesondere den weiter unten beschriebenen Schwenkund/oder Rastmechanismus abdeckt, um diesen vor Verschmutzung aber auch die Fahrzeuginsassen vor möglichen Verletzungen zu schützen.

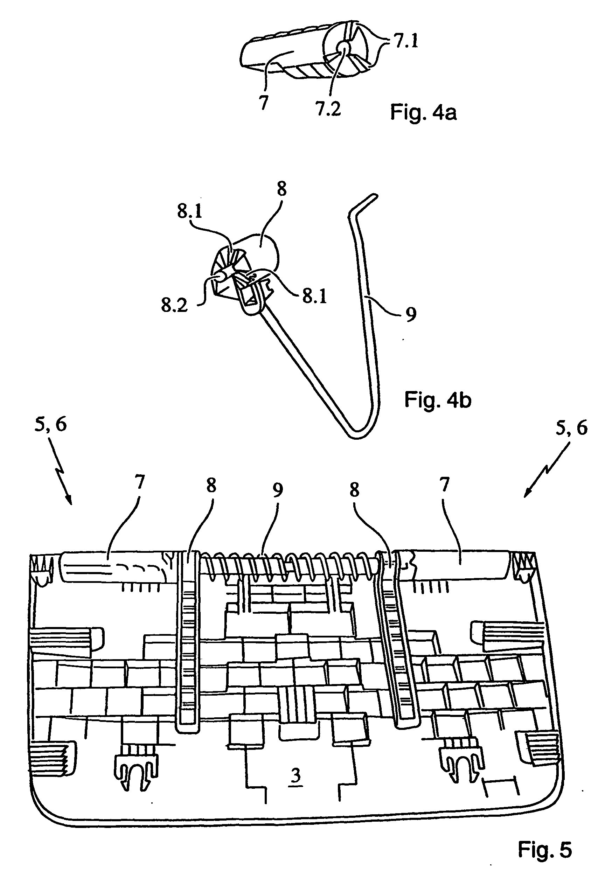

Figuren 4 bis 4b zeigen eine erste Ausführungsform des Schwenk- und Rastmechanismus des Tisches 3. Dieser weist rechts und links zwei erste ortsfeste Form- und/oder Kraftschlusselemente 7 auf, die jeweils vorzugsweise drehfest in den Angeln 4.1 der Halterung 4 gelagert sind. Diese Form- und/oder Kraftschlusselemente 7 wirken jeweils mit einem Kraftschlusselement 8 drehend und rastend zusammen, das drehfest an dem Tisch 3 angeordnet sind. Die beiden Formund/oder Kraftschlusselemente 8 werden von einer Feder 9 jeweils in Richtung des Form- und/oder Kraftschlusselementes 7 vorspannt. Dadurch wird eine Geräuschentwicklung vermieden und sichergestellt, dass die Nocken an dem ortsfesten Form- und/oder Kraftschlusselement 7 immer mit den Ausnehmungen an dem Form- und/oder Kraftschlusselement 8 rastend zusammenwirken, so dass der Tisch immer in seiner jeweiligen Schwenkposition rastend festgestellt ist. Figur 4 a zeigt detailiert das ortsfeste Form- und/oder Kraftschlusselement 7. Dieses weist Nocken 7.1 und in seiner Längsachse eine Bohrung 7.2 auf. Wie in Figur 4b zu erkennen ist, wirkt diese Bohrung 7.2 mit einem Zapfen (Pin) 8.2 zusammen, der in die Bohrung gesteckt wird und somit das Drehlager für den Tisch darstellt. Des weiteren weist das drehbare Form- und/oder Kraftschlusselement Einbuchtungen 8.1 auf, die komplementär zu den Nocken 7.1 und in diese rastend eingreifen. Außerdem ist in Figur 4 b die Feder 9 zu erkennen, die das Form- und/oder Kraftschlusselement 8 in Richtung des Form- und/oder Kraftschlusselementes 7 drückt. Der Fachmann erkennt, dass das Form- und/oder Kraftschlusselement 8 auf der rechten Seite der Feder aus Übersichtlichkeitsgründen weggelassen wurde. Das Form- und/oder Kraftschlusselement 8 ist verschieblich an dem Tisch 1 angeordnet.

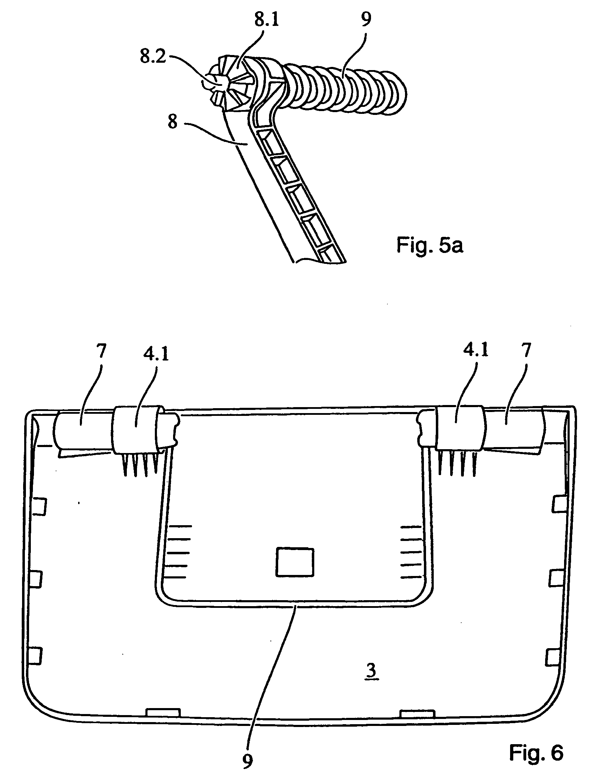

Figuren 5 und 5 a zeigen eine weitere Ausführungsform des Tisches des erfindungsgemäßen Fahrzeugsitzes. Dieser weist die bereits beschriebenen Form- und/oder Kraftschlusselemente 7 auf. Auch dieses Mal wirken diese beiden Form- und/oder Kraftschlusselemente mit an dem Tisch verschieblich angeordneten Form- und/oder Kraftschlusselementen 8 jeweils drehend und rastend zusammen. Die beiden Form- und/oder Kraftschlusselemente 8 werden in dem vorliegenden Fall mit einer Feder 9 gegen die Form- und/oder Kraftschlusselemente 7 vorgespannt. Details der Form- und/oder Kraftschlusselemente 8 sind in der Figur 5 a zu erkennen. Auch hier weist jedes Form- und/oder Kraftschlusselement 8 einen zapfen (Pin) 8.2 auf, der in einer Bohrung, die in dem Form- und/oder Kraftschlusselement 7 angeordnet ist, gesteckt wird. Die länglichen Einbuchtungen 8.1 wirken mit Nocken 7.1 rastend zusammen.

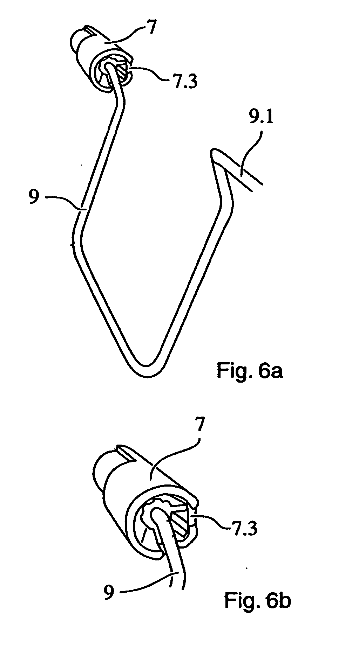

Figuren 6 bis 6 b zeigen eine dritte Ausführungsform des Tisches des erfindungsgemäßen Fahrzeugsitzes. In dem vorliegenden Fall wirkt die Feder 9 unmittelbar mit den ortsfesten Form- und/oder Kraftschlusselementen zusammen. Die Feder ist in dem vorliegenden Fall im Wesentlichen U-förmig ausgebildet, wobei an den freien Enden des U's jeweils ein abgewinkelter Bereich 9.1 angeordnet ist, der in eine Bohrung, die sich in dem Form- und/oder Kraftschlusselement 7 befindet, jeweils gesteckt wird, wodurch ein Drehlager realisiert wird. Um sicherzustellen, dass der Tisch in der jeweils gewünschten Stellung verrastet werden kann, weist das Form- und/oder Kraftschlusselement 7 Einbuchtungen 7.3 auf, die rastend mit den Schenkeln des U's der Feder 9 zusammenwirken.

### Bezugszeichenliste:

- 1: Fahrzeugsitz
- 2: Rückenlehne
- 3: Tisch
- 4: Halterung
- 4.1: Angel
- 5: Schwenkmechanismus
- 6: Rastmechanismus
- 7: ortsfestes Form- und/oder Kraftschlusselement
- 7.1: Nocken
- 7.2: Bohrung
- 7.3: Ausnehmung
- 8: drehbares Form- und/oder Kraftschlusselement
- 8.1: snehmung
- 8.2: Zapfen (Pin)
- 9: Federmittel
- 9.1: abgewinkelter Abschnitt
- 10: Becherhalter
- 11: Abdeckung
- 12: Querriegel

## Patentansprüche

1. Fahrzeugsitz (1), mit einem an dessen Rückenlehne (2) schwenkbar angeordneten Tisch (3), der eine an der Rückenlehne vorgesehene Halterung (4) und einen Schwenkmechanismus (5) aufweist, mit dem der Tisch (3) schwenkbar an der Rückenlehne (2) angeordnet ist, wobei der Schwenkmechanismus im Tisch (3) angeordnet ist und der Schwenkmechanismus (5) einen Rastmechanismus (6) aufweist, wobei der Rastmechanismus ein ortsfestes, mit der Halterung verbundenes, Form- und/oder Kraftschlusselement (7) aufweist, das mit einem weiteren Form- und/oder Kraftschlusselement (8) rastend zusammenwirkt, das an dem Tisch angeordnet ist und sich gemeinsam mit dem Tisch dreht, wobei die beiden Form- und/oder Kraftschlusselemente (7, 8) auch das Drehlager für den Tisch darstellen, **dadurch gekennzeichnet, dass** die beiden Form- und/oder Kraftschlusselemente (7, 8) Nocken (7.1) und dazu komplementäre Einbuchtungen (8.1) aufweisen, die jeweils stirnseitig an den beiden Form- und/oder Kraftschlusselementen (7, 8) angeordnet sind und dass das Form- und/oder Kraftschlusselement (7) in seiner Längsachse eine Bohrung (7.2) aufweist, die einen Zapfen (8.2) aufnimmt, der an dem weiteren Form- und/oder Kraftschlusselement (8) vorgesehen ist.

2. Fahrzeugsitz nach Anspruch 1, **dadurch gekennzeichnet, dass** das weitere Form- und/oder Kraftschlusselement (8) gegen das Form- und/oder Kraftschlusselement (7) mit einem Federmittel (9) vorgespannt ist.

## Claims

1. Vehicle seat (1), with a table (3) which is arranged pivotably on the backrest (2) of said vehicle seat and has a mount (4), which is provided on the backrest, and a pivoting mechanism (5) with which the table (3) is arranged pivotably on the backrest (2), wherein the pivoting mechanism is arranged in the table (3), and the pivoting mechanism (5) has a latching mechanism (6), wherein the latching mechanism has a positionally fixed interlocking and/or frictional element (7) which is connected to the mount and interacts in a latching manner with a further interlocking and/or frictional element (8) which is arranged on the table and rotates together with the table, wherein the two interlocking and/or frictional elements (7, 8) also constitute the rotary bearing for the table, **characterized in that** the two interlocking and/or frictional elements (7, 8) have cams (7.1) and complementary indentations (8.1), which are each arranged on the end sides of the two interlocking and/or frictional elements (7, 8), and **in that** the longitudinal axis of the interlocking and/or frictional element (7) has a hole (7.2) which receives a pin (8.2) which is provided on the further interlocking and/or frictional element (8).

2. Vehicle seat according to Claim 1, **characterized in that** the further interlocking and/or frictional element (8) is prestressed against the interlocking and/or frictional element (7) by means of a spring means (9).

## Revendications

1. Siège de véhicule (1), comprenant une table (3) disposée de manière pivotante sur son dossier (2), qui présente une fixation (4) prévue sur le dossier et un mécanisme de pivotement (5), avec lequel la table (3) est disposée de manière à pouvoir pivoter sur le dossier (2), le mécanisme de pivotement étant disposé dans la table (3) et le mécanisme de pivotement (5) présentant un mécanisme d'encliquetage (6), le mécanisme d'encliquetage présentant un élément fixe (7) d'engagement par force et/ou par coopération de forme connecté à la fixation, qui coopère par encliquetage avec un élément supplémentaire (8) d'engagement par force et/ou par coopération de forme, qui est disposé sur la table et qui tourne conjointement avec la table, les deux éléments (7, 8) d'engagement par force et/ou par coopération de forme constituant également le palier pivotant pour la table, **caractérisé en ce que** les deux éléments (7, 8) d'engagement par force et/ou par coopération de forme présentent des cames (7.1) et des creux (8.1) complémentaires, qui sont disposés à chaque fois du côté frontal sur les deux éléments (7, 8) d'engagement par force et/ou par coopération de forme et **en ce que** l'élément (7) d'engagement par force et/ou par coopération de forme présente, dans son axe longitudinal, un alésage (7.2) qui reçoit un tourillon (8.2) qui est prévu sur l'élément supplémentaire (8) d'engagement par force et/ou par coopération de forme.

2. Siège de véhicule selon la revendication 1, **caractérisé en ce que** l'élément supplémentaire (8) d'engagement par force et/ou par coopération de forme est précontraint contre l'élément (7) d'engagement par force et/ou par coopération de forme avec un moyen de ressort (9).
